Europäisches Patentamt

European Patent Office

Office européen des brevets

(19)

(11) Publication number: 0 083 867

A2

# (12) EUROPEAN PATENT APPLICATION

(21) Application number: 82306907.5

(22) Date of filing: 23.12.82

(51) Int. Cl.³: B 05 D 3/10
B 05 D 7/24, C 09 D 1/02
C 09 D 5/18

(30) Priority: 25.12.81 JP 211612/81

(43) Date of publication of application:
20.07.83 Bulletin 83/29

(84) Designated Contracting States:
DE FR GB IT

(71) Applicant: INA SEITO CO., LTD
3-6 Koiehon-Machi
Tokoname Aichi(JP)

(72) Inventor: Ojika, Yoshihiko
6-2, Seikai-Cho
Tokoname Aichi(JP)

(72) Inventor: Kajima, Yoshihiro
3-7, Taya-Cho
Tokoname Aichi(JP)

(72) Inventor: Tsuzuki, Setsuo
271, Aza-Ishihata Oaza-Okuda Mihama-Cho
Chita-Gun Aichi(JP)

(74) Representative: Lewin, John Harvey et al,
Elkington and Fife High Holborn House 52/54 High
Holborn
London WC1V 6SH(GB)

(54) Method of applying an inorganic paint.

(57) An inorganic undercoating paint composed essentially of a water-soluble alkali metal silicate or a modified product thereof, or a mixture thereof, and a relatively large quantity of a curing agent is applied to an inorganic base to form an undercoating thereon. The undercoating is treated with an acid, and dried, whereby a multiplicity of fine cracks are formed in the undercoating. An inorganic finish coating paint is applied in a thin film onto the undercoating. The finish coating paint is composed essentially of a water-soluble alkali metal silicate or a modified product thereof, or a mixture thereof, and a relatively small quantity of a curing agent.

EP 0 083 867 A2

METHOD OF APPLYING AN INORGANIC
PAINT

## BACKGROUND OF THE INVENTION

1. Field of the Invention:

This invention relates to a method of applying an inorganic paint, particularly a water-soluble alkali metal silicate paint, to the surface of a porous inorganic base such as calcium silicate or asbestos cement, or a nonporous inorganic base such as a metal or glass.

2. Description of the Prior Art:

Inorganic materials, such as asbestos cement and calcium silicate boards, are widely in use, since they are nonflammable and highly durable. They, however, lack a beautiful decorative appearance, and are, therefore, coated with an organic paint if a beautiful decorative appearance is required. The organic paint is, however, flammable and lacks durability, and therefore, impair the excellent features of inorganic materials seriously. This has given rise to the use of a nonflammable inorganic paint so that the features of the inorganic base can be sustained. Inorganic paints are, however, generally inferior to organic paints in flexibility, lustrousness and smoothness, though superior in heat resistance and nonflammability. Due to its poor flexibility, the coated film of an inorganic paint cannot adapt itself fully to a change in the dimensions of a porous base, such as an asbestos cement or calcium silicate board, by expansion or contraction when the base has absorbed water or become dry, or when there has been a change in the humidity of the air. This causes the coated film to crack.

If a crack forms, a contaminant adheres to it, and contaminates the coated surface.    The coated surface is deprived of its beautiful appearance.

## SUMMARY OF THE INVENTION

It is an object of this invention to provide a method of applying an inorganic paint which can form an excellent coated film free from the drawbacks as hereinabove pointed out.

This object is attained by a method which comprises applying to an inorganic base an inorganic undercoating paint consisting mainly of a water-soluble alkali metal silicate or a modified water-soluble alkali metal silicate or a mixture thereof, and a relatively large quantity of a curing agent to form an undercoating film, treating the undercoating film with an acid and drying it to form a multiplicity of fine cracks therein, and applying to the undercoating film an inorganic finish coating paint consisting mainly of a water-soluble alkali metal silicate or a modified water-soluble alkali metal silicate or a mixture thereof, and a relatively small quantity of a curing agent to form a thin finish coating film on the undercoating film.

The method of this invention is very useful for applying a lustrous coated film which is excellent in contamination resistance and efflorescence resistance.

## DETAILED DESCRIPTION OF THE INVENTION

This invention is applicable to various kinds of inorganic bases.    They first include porous inorganic materials, such as asbestos cement, asbestos pearlite, calcium silicate, asbestos cement-calcium silicate, plaster, mortar, concrete, pulp cement, wood wool cement, glass fiber-reinforced cement, carbon fiber-reinforced cement or ALC boards, or rock wool inorganic molded products. They also include nonporous inorganic materials such as metal, glass or porcelain.

The inorganic paint used in accordance with this invention comprises a water-soluble alkali metal silicate of the general formula $M_2O \cdot XSiO_2 \cdot YH_2O$, where M stands for an alkali metal of Group 1 in the periodic table, and X and Y are both a positive number, or such a water-soluble alkali metal silicate modified with a polyvalent metal compound, or a mixture thereof, and a curing agent. The paint may also contain a filler and/or a pigment, if required. Examples of the silicate include sodium silicate, potassium silicate and lithium silicate. Although there is no limitation in particular to the value of X, it is preferably in the range of 2 to 5 from the standpoint of film formability and durability. There is no particular limitation to the value of Y, either, if there is obtained a final composition which is appropriately viscous, and easy to handle. The modified water-soluble alkali metal silicate is obtained by reacting a water-soluble alkali metal silicate with one or more compounds of polyvalent metals, such as an oxide, hydroxide, fluoride, carbonate or phosphate of magnesium, aluminum, calcium, zinc or zirconium. It contributes to improving the water and chemical resistance of the coated film.

One or more curing agents are used to cure the water-soluble alkali metal silicate or the modified water-soluble alkali metal silicate. Examples of the curing agents include

4

polyvalent metal oxides such as zinc oxide, magnesium oxide and aluminum oxide, polyvalent metal hydroxides such as magnesium hydroxide and aluminum hydroxide, polyvalent metal carbonates such as zinc carbonate and magnesium carbonate, polyvalent metal phosphates such as magnesium phosphate, aluminum phosphate and zinc phosphate, silicofluorides such as zinc silicofluoride and aluminum silicofluoride, and organic compounds such as glyoxal and oxalic amide.

In the event the filler is added, it is possible to use a granular filler such as silica, alumina or glass powder, a flaky filler such as clay or mica, or a fibrous filler such as glass fiber powder.

If any pigment is added, it is possible to use, for example, titanium dioxide, iron oxide red, chrome yellow, chrome green, ultramarine, mars violet, cobalt blue or carbon black. Other known additives, such as a surface active agent, a dispersant and a thickener, may be employed, if required.

The acid treatment of the undercoating film is carried out by using an acid solution preferably having a preliminarily adjusted acid concentration which gives a pH range of 0.5 to 6. It is possible to use one or both of inorganic and organic acids. Examples of the inorganic acids include hydrochloric acid, sulfuric acid, nitric acid, aluminum chloride, aluminum sulfate, monobasic aluminum phosphate, monobasic calcium phosphate, monoammonium phosphate and aluminum nitrate. Examples of the organic acids include oxalic acid, citric acid, acetic acid and tartaric acid. It is possible to use one or more of these acids.

One of the salient features of this invention resides in the acid treatment of the undercoating film, and the drying thereof to form a multiplicity of fine cracks in the undercoating film. The acid employed for this treatment causes the elution of the alkali metal from the undercoating film, and thereby the formation of a multiplicity of very small voids therein. The coated film, thus, becomes highly porous. After the porous film has been washed to remove the remaining acid solution, it is dried by hot air having a temperature of about 100°C. The film shrinks, and as a result, it has a multiplicity of substantially uniformly distributed fine cracks having a maximum width not exceeding 10 microns. The cracks have a depth which is preferably equal to the thickness of the film. The density of the cracks can be expressed by the number of cracks which cross a 1 mm long line segment between any two points on the film. According to the inventors' experiments, it is preferable that the film have 3 to 10 cracks crossing any such 1 mm long line segment.

In order to form a multiplicity of such fine cracks uniformly all over the film, it is advisable to ensure the uniform elution of a large quantity of the alkali metal. It is, therefore, recommended that the undercoating paint contain a large quantity of a solid substance such as a filler, and that the coated film be subjected to the acid treatment after it has been left in the air or heated to the extent that it is not completely cured. If the film is completely cured before its acid treatment, it is impossible to expect a sufficient elution of the alkali metal and the formation of a sufficiently porous film to enable a multiplicity of fine cracks. If, on the other hand, the undercoating film is left in the air for too short a time, or heated to too low a temperature, it is impossible to achieve the selective elution of only the alkali metal, and there occurs a heavy elution of the film as a whole, resulting in a weak and uneven film. The optimum time for which the undercoating film should be left in the air or heated depends on the curing agent used. If the curing agent is of the room temperature curable type, and requires 72 to 240 hours of leaving in the air for complete curing, the film is left in the air for, say, 12 to 48 hours. An acid metal phosphate is an example of such a curing agent. If the curing agent is of the thermally curable type, and requires heating to a temperature of 200°C to 300°C for complete curing, i.e., if it is a metal oxide or hydroxide by way of example, the film is heated to a temperature in the range between ordinary room temperature and 200°C.

In order to achieve the elution of a large quantity of the alkali metal without leaving the coated film in the acid solution for too long a time, it is advisable to use an acid solution having an acid content of 0.01 to 10% by weight, and a temperature in the range between ordinary room temperature and 60°C. The solution preferably has a pH value of 0.5 to 6 as already stated, and this pH range should preferably be maintained throughout the acid treatment. The acid treatment may continue for one minute to 10 hours, depending on the materials involved. If a 3% ammonium phosphate solution having a pH value of 4.5 is used, an optimum treating time would be about eight hours. Upon completion of the acid treatment, the film is washed with water to remove any remaining acid solution, and dried by hot air having a temperature of about 100°C. The porous film shrinks, and obtains a multiplicity of fine cracks.

The inorganic finish coating paint is applied to the finely cracked undercoating film to form a thin finish coating film thereon. The finish coating paint flows into, the fine cracks, and fills them to a certain extent. It is important that the finish coating film should not be so thick as to fill the fine cracks completely. The finish coating paint should be applied to the extent that it narrows the fine cracks to a width of, say, 0.1 to 1 micron. In other words, it is important that the finish coating film should also have very fine cracks therein, so that the combined undercoating and finish coating films may have a multiplicity of fine cracks having a width of, say, 0.1 to 1 micron and a depth which is equal to the combined thickness of those films.

Thus, the combined film is divided by the fine cracks into a multiplicity of fine film fractions which are disconnected from one another. These fractions absorb any stress imposed by the base on the film in the event there has occurred any relatively large dimensional change in the base by expansion or contraction as a result of a change in the humidity of the air, or water absorption or drying, or in the event the base has been distorted by an external force. No new and large crack is formed in the coated film.

8

According to this invention, it is possible to form a beautifully coated film which does not have any new and large crack for a long time. The fine cracks which originally exist in the coated film have a width of only 0.1 to 1 micron, as already stated. They are not visible to the naked eye unless the coated film is dyed or otherwise specially treated. Therefore, they do not affect the beautiful surface of the finish coating. They are too small to admit any of various kinds of dust by which the coated film is usually contaminated. The coated film formed by the method of this invention does not have any large crack that may admit any such contaminant.

The coated film formed by the method of this invention is greatly improved in efflorescence resistance, since the alkali metal is fully removed from the undercoating, and since it is substantially free from any large crack that enables the elution of any efflorescent substance from the base or the undercoating onto the surface of the finish coating.

It is recommended that the quantity of the filler and the curing agent in the finish coating paint be kept at a minimum, since otherwise, the finish coating film might be unsatisfactory in lustrousness, beauty, smoothness and contamination resistance. It is, however, needless to say that the shortage of the curing agent in the finish coating paint should not result in its improper curing. Therefore, the undercoating paint contains a slightly excessive quantity of the curing agent to assist the satisfactory curing of the finish coating. Since the acid treated undercoating has a multiplicity of fine cracks, and contains a large quantity of unreacted curing agent, a part of the finish coating paint applied thereon flows through the fine cracks into the undercoating, and reacts with the unreacted curing agent therein.

The invention will now be described in further detail with reference to several examples and comparative examples.

EXAMPLE 1

(a) Undercoating

The following materials, except sodium silicate, were mixed together in a ball mill for 16 hours, and after sodium silicate had thereafter been added, the mixture was stirred for 10 minutes to prepare an undercoating paint.

Recipe for undercoating paint:

| Sodium silicate (#3) | 100 parts by weight |
| Zinc oxide | 35 " " " |
| Silica powder | 35 " " " |
| Cobalt blue (pigment) | 15 " " " |
| Sodium tripolyphosphate | 2 " " " |
| Water | 110 " " " |

The paint was sprayed by air twice onto a calcium silicate board having a thickness of 3 mm to form a coated layer having a thickness of 50 microns, and the board was heated at 150°C for 30 minutes.

(b) Acid Treatment

The undercoated board was immersed in an oxalic acid solution containing 0.7% oxalic acid, and having a temperature of 30°C and a pH value of 1 for five minutes, washed with water, and dried at 80°C.

10

(c)    Finish Coating

A mixture of 100 parts of potassium silicate having a solid content of 30% and 0.43 part of zinc carbonate containing 70% ZnO was reacted at 80°C for eight hours to prepare modified potassium silicate. This modified potassium silicate and the other materials shown below were mixed in a ball mill for four hours to prepare a finish coating paint.

Recipe for finish coating paint:

| | |
|---|---|
| Modified potassium silicate | 100 parts by weight |
| Tribasic magnesium phosphate | 3 " " " |
| Water | 60 " " " |
| Surface active agent (5% solution) | 1.6 " " " |

The paint was sprayed by air onto the acid treated board to form a finish coated film having a thickness of five microns, and the board was heated at 250°C for 30 minutes, whereby the paint was cured.

## EXAMPLE 2

The procedures of EXAMPLE 1 were repeated, except that the undercoating and finish coating paints were prepared in accordance with the following recipes, and applied to form an undercoating having a thickness of 30 microns and a finish coating having a thickness of 20 microns, and that the coated film was heated at 230°C for 30 minutes for curing.

Recipe for undercoating paint:

| | |
|---|---|
| Sodium silicate (#3) | 100 parts by weight |
| Zinc oxide | 25 " " " |
| Condensation monobasic aluminium phosphate | 5 " " " |
| Titanium dioxide | 10 " " " |
| Lithium carbonate | 2 " " " |
| Silica powder | 20 " " " |
| Water | 65 " " " |

Recipe for finish coating paint:

| | | |
|---|---|---|
| Sodium silicate (#3) | 100 | parts by weight |
| Zinc oxide | 12 | " " " |
| Condensation monobasic aluminum phosphate | 4 | " . " " |
| Titanium dioxide | 3 | " · " " |
| Aerogel | 1 | " · " " |
| Sodium tripolyphosphate | 0.5 | " " " |
| Alumina powder | 5 | " " " |
| Water | 28 | " " " |
| Surface active agent (5% solution) | 1.5 | " " " |

## EXAMPLE 3

(a) Undercoating

The following materials, except sodium silicate and lithium silicate, were mixed together in a ball mill for 24 hours, and after sodium silicate and lithium silicate had thereafter been added, the mixture was stirred for 10 minutes to prepare an undercoating paint.

Recipe for undercoating paint:

| | | |
|---|---|---|
| Sodium silicate (#1) | 80 | parts by weight |
| Lithium silicate having a solid content of 25% | 20 | " " " |
| Zinc oxide | 15 | " " " |
| Sodium silicofluoride | 10 | " " " |
| Silica powder | 25 | " " " |
| Titanium dioxide (pigment) | 15 | " " " |
| Water | 75 | " " " |

The paint was sprayed by air twice onto an asbestos cement board having a thickness of 3 mm to form an undercoating having a thickness of 50 microns, and the board was left in the room for one day and night.

(b) Acid Treatment

The undercoated board was coated on the whole surface thereof by an air spray of a 0.1% hydrochloric acid solution having a pH value of 2.   It was left at rest for two minutes, washed with water, and dried.

(c) Finish Coating

The following materials, except sodium silicate and lithium silicate, were mixed together in a ball mill for 48 hours, and after sodium silicate and lithium silicate had thereafter been added, the mixture was stirred for 15 minutes to prepare a finish coating paint.

Recipe for finish coating paint:

| Sodium silicate (#3) | 80 parts by weight |
| Lithium silicate having a solid content of 25% | 20 " " " |
| Zinc oxide | 10 " " " |
| Sodium silicofluoride | 5 " " " |
| Titanium dioxide (pigment) | 3 " " " |
| Water | 20 " " " |

The paint was sprayed by air onto the acid-treated board to form a finish coating having a thickness of 10 microns, and the board was heated at 200°C for 30 minutes, whereby the paint was cured.

COMPARATIVE EXAMPLE 1

The steps (b) and (c) of the process set forth in EXAMPLE 1 were omitted, and the board was heated at 250°C for 30 minutes for curing purposes.

COMPARATIVE EXAMPLE 2

The step (b) of the process set forth in EXAMPLE 1 was omitted.

COMPARATIVE EXAMPLE 3

The procedures of EXAMPLE 1 were repeated, except that 10 parts by weight of silica powder were used for preparing the undercoating paint.

COMPARATIVE EXAMPLE 4

The following materials were mixed in a ball mill for two hours to prepare a coating solution.

Recipe:

| | | | | |
|---|---|---|---|---|
| Sodium silicate (#3) | 100 | parts | by | weight |
| Zinc oxide | 20 | " | " | " |
| Condensation monobasic aluminum phosphate | 5 | " | " | " |
| Lithium carbonate | 2 | " | " | " |
| Glass powder | 5 | " | " | " |
| Iron oxide red (pigment) | 10 | " | " | " |
| Water | 100 | " | " | " |

The coating solution was air sprayed onto a calcium silicate board having a thickness of 3 mm to form a coated film having a thickness of 50 microns, and the board was heated at 230°C for 30 minutes for curing purposes.

The coated films obtained in the foregoing EXAMPLES and COMPARATIVE EXAMPLES were all satisfactory in water resistance, accelerated weatherability, boiling water resistance and acid resistance. They were all 100% satisfactory in adhesion, too. EXAMPLES 1 to 3 were all satisfactory in efflorescence resistance, while COMPARATIVE EXAMPLES 1 and 2 were particularly low in efflorescence resistance, and COMPARATIVE EXAMPLES 3 and 4 were also low. EXAMPLES 1 to 3 were all satisfactory in contamination resistance, but the coated films of all of COMPARATIVE EXAMPLES 1 to 4 were dirty.

As regards lustrousness, all of the coated films were satisfactory, except COMPARATIVE EXAMPLES 1 and 4, COMPARATIVE EXAMPLE 1 being inferior to COMPARATIVE EXAMPLE 4. The coated films of EXAMPLES 1 to 3 had an average crack width of 0.4, 0.9 and 0.8 microns, respectively, while those of COMPARATIVE EXAMPLES 1 to 4 had an average crack width of 9, 10, 7 and 9 microns, respectively.

The various properties of the coated films were examined as will hereinafter be set forth.

(1) Water resistance: Immersion for 240 hours in city water having a temperature of 20°C.

(2) Accelerated weatherability: Exposure for 100 hours to a sunshine weatherometer.

(3) Boiling water resistance: Immersion for five hours in city water boiling at 100°C.

(4) Efflorescence resistance: Each sample was left for a day with its rear surface in a wet condition, and left for a day to dry in the air. This sequence was repeated 10 times.

(5) Avergae crack width: By an electron microscope after storage in the air for three months.

(6) Contamination resistance: Vaseline containing 10% of carbon black was applied to each sample, and after it had been left for a day, the sample was wiped with gauze soaked with soap water.

(7) Luster: Visual inspection.

(8) Acid resistance: Each sample was kept in intimate contact with a 10% aqueous solution of HC1 for 15 minutes.

(9) Alkali resistance: Each sample was kept in intimate contact with a 10% aqueous solution of NaOH for 15 minutes.

(10)    Adhesion: Cross-cut adhesion test with 100
openings measuring 2 mm square.

According to the method of this invention, it is possible to form on a porous inorganic base an inorganic paint film which does not form any undesirably large crack irrespective of any dimensional change in the base by expansion or contraction due to a change in the humidity of the air, or water absorption or drying, and which is, therefore, excellent in contamination resistance, and also in other properties, such as efflorescence resistance, lustrousness and weatherability.

This invention is, of course, equally applicable to nonporous inorganic materials, such as metal, glass and porcelain. The method of this invention makes it possible to form on a metal, glass or porcelain base an inorganic paint film which does not crack despite any dimensional change of the base by bending or thermal expansion, and which is excellent in various properties, including efflorescence resistance, lustrousness and weatherability. This aspect of the invention will now be described by way of example.

EXAMPLE 4

(a)    Undercoating

The following materials, except potassium silicate, were mixed in a ball mill for 16 hours, and after potassium silicate had thereafter been added, the mixture was stirred for 10 minutes to prepare an undercoating paint.

Recipe for undercoating paint:

| | | |
|---|---|---|
| Potassium silicate having a solid content of 30% | 100 parts by weight | |
| Zinc oxide | 25 " " " | |

16

| | |
|---|---|
| Silica powder | 30 parts by weight |
| Iron oxide red (pigment) | 10 " " " |
| Aerogel | 1 " " " |
| Sodium pyrophosphate | 1 " " " |
| Water | 65 " " " |

The paint was air sprayed onto an iron plate having a thickness of 0.3 mm twice to form an undercoating having a thickness of about 40 microns, and the plate was heated at 160°C for 15 minutes.

(b) Acid Treatment

The undercoated plate was immersed for five minutes in a 1% oxalic acid solution at 40°C, washed with water, and dried at 100°C.

(c) Finish Coating

The same finish coating paint as used at (c) in EXAMPLE 1 was air sprayed onto the acid treated plate to form a finish coating having a thickness of about 4 microns, and the plate was heated at 250°C for 20 minutes, whereby the paint was cured.

COMPARATIVE EXAMPLE 5

The step (b) of EXAMPLE 4 was omitted.

The coated films of EXAMPLE 4 and COMPARATIVE EXAMPLE 5 were both satisfactory in water resistance, accelerated weatherability, boiling water resistance, acid resistance, adhesion, efflorescence resistance, contamination resistance and lustrousness. The coated film of EXAMPLE 4 had an average crack width of 0.4 micron, and COMPARATIVE EXAMPLE 5 was free from any crack. Their difference appeared when a bending resistance test was conducted. The film of EXAMPLE 4 could be bent without causing any separation until it was bent into a curve having a radius of 10 mm, and peeled for the first time when it was bent into a curve having a radius of 5 mm.     On the other hand, the film of COMPARATIVE EXAMPLE 5 formed a considerably large crack when bent into a curve having a radius of 80 mm, and peeled off when bent into a curve having a radius of 10 mm, though it could be bent until a curve having a radius of 90 mm.     The plate to be tested was bent about columns having different radii so that the coated film might be located outside, and the film was examined for cracking and peeling.

WHAT IS CLAIMED IS:

1.     A method of applying an inorganic paint to an inorganic base, comprising:

applying to an inorganic base an inorganic undercoating paint consisting essentially of a substance selected from the group consisting of a water-soluble alkali metal silicate, a modified water-soluble alkali metal silicate and a mixture thereof, and a relatively large quantity of a curing agent to form an undercoating on said base;

treating said undercoating with an acid;

drying said undercoating, whereby a multiplicity of fine cracks are formed in said undercoating; and

applying to said undercoating a thin film of an inorganic finish coating paint composed essentially of a substance selected from the group consisting of a water-soluble alkali metal silicate, a modified water-soluble alkali metal silicate and a mixture thereof, and a relatively small quantity of a curing agent.

2.     A method as set forth in claim 1, wherein said water-soluble alkali metal silicate is of the general formula $M_2O.XSiO_2.YH_2O$, where M stands for an alkali metal of Group 1 in the periodic table, and X and Y are both a positive number, and wherein said X is an integer of 2 to 5.

3.     A method as set forth in claim 2, wherein said modified water-soluble alkali metal silicate is said water-soluble alkali metal silicate modified with a compound of a polyvalent metal.

4.     A method as set forth in claim 3, wherein said water-soluble alkali metal silicate is selected from the group consisting of sodium silicate, potassium silicate and lithium silicate, and wherein said compound is selected from the group consisting of the oxides, hydroxides, fluorides, carbonates and phosphates of magnesium, aluminium, calcium, zinc and zirconium.

5. A method as set forth in claim 1, wherein said acid is in the form of a solution of at least one acid selected from the group consisting of inorganic and organic acids, said solution having a pH value of 0.5 to 6.

6. A method as set forth in claim 5, wherein said undercoating is dried by hot air having a temperature of about 100°C after any remainder of said solution has been removed therefrom.

7. A method as set forth in claim 1, wherein said cracks exist in the number of 3 to 10 per line segment having a length of 1 mm.